# EUROPEAN PATENT SPECIFICATION

(11) **EP 1 659 785 B1**
(45) Date of publication and mention of the grant of the patent: **05.01.2011**
(21) Application number: 04027257.7
(22) Date of filing: 17.11.2004
(51) Int. Cl.: H04N 5/44, H04N 5/50

(54) **Receiver with multiple tuners**
Empfänger mit mehreren sperrbaren Tunern
Récepteur avec plusiers syntoniseurs verrouillables

(43) Date of publication of application: 24.05.2006
(73) Proprietor: Panasonic Corporation, Kadoma-shi Osaka 571-8501 (JP)
(72) Inventor: Woyth, Torsten, 38690 Vienenburg (DE); Rieger, Carsten, 38268 Lengede (DE)
(74) Representative: Gerstein, Hans Joachim

(56) References cited:
- US-A1- 2003 128 302
- US-B1- 6 766 100

## Description

The invention is related to a receiver comprising two or more tuners for receiving selected program channels in parallel and a channel selection means, said two or more tuners having a locking signal input for locking any change of the selected program channel, when the locking signal is set to activate locking.

Video recorder or television sets comprise receives for receiving broadcast program channels. There are receives well known in the prior art, which comprise two or more tuners for receiving program channels in parallel.

In the current plural tuner receiver systems, the receiving tuner is pre-selected or must be selected manually by the user through a menu,

A receiver comprising multiple tuners is disclosed in US 2003/0128302 A1. The known receiver provides for selecting among multiple tuners to tune a particular channel. A request is received to tune a first channel. In response to this request, a first tuner is assigned to tune the first channel. A request is received to tune a second channel. If the program tuned by the first tuner is not being recorded, the first tuner is assigned to tune the second channel. If the program tuned by the first tuner is being recorded, the second tuner is assigned to tune the second channel. The selection of the tuner and the channels is done by a tuner controller which receives user control inputs. However, the known system does not comprise a locking signal to be fed into the tuners.

It is therefore an object of the invention to provide an improved receiver comprising two or more tunes for receiving selected program channels in parallel and a channel selection means provided for an automated tuner selection.

The object is achieved by the receiver according to the preamble of claim 1 in that the channel selection means comprise an input for the locking signal, and that the channel selection means are provided for selecting of the tuners which are unlocked, based upon the locking signal when a program channel is selected by an user.

According to the present invention, the locking signals for the tuners, which are intended to lock the tuners, are made available for the channel selection means in order to evaluate the unlocked tuners for selection when a channel is changed by a user.

Thus, the user simply enters a channel number, e. g. by use of a remote control, which causes an automatic process of change of the receiving tuner when the active tuner is locked.

In an improved embodiment, the channel selection means are provided for checking a signal quality information of the tuners indicating that a channel signal for a selected program channel is received by a respective tuner in the process of tuner selection in order to select an unlocked tuner providing a channel signal for the selected program channel.

By way of evaluating a signal quality information, only those tuners are selected which are able to receive the selected program channel.

In an further improved embodiment, the locking signal is set by a record mode of a video recorder, a download of an electronic program guide, a download of receiver software, parsing of service information and/or pausing a live video for time shifted replay.

These and any other possible functions are effecting that the actual tuner is locked.

The receiver can be comprised in a video recorder or a television set or any other receiver device.

The invention is further explained by way of example together with the enclosed drawings:
- Figure 1 -: a bock diagram of a receiver according to the present invention;
- Figure 2 -: a flow diagram of the process of locking and selecting of tuners.

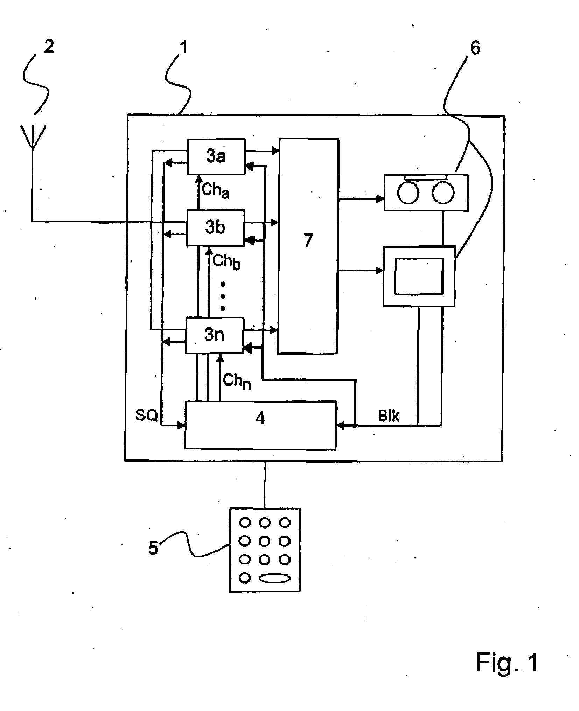

Figure 1 shows a block diagram of the receiver 1 according to the present invention. The broadcast signal is received from an antenna 2 and fed to a plurality of tuners 3a, 3b, ..., 3n, which are provided for receiving selected program channels in parallel. The respective channel number Chₐ, Ch_{b}, ..., Chₙ is set by channel selection means 4, wherein the user inputs a channel number Ch for the program channel the user currently wants to receive.

The output of at least the currently watched tuner 3 is connected to a selected function of the receiver apparatus, e. g. a video recorder, a video display, an electronic program guide, a video text system etc., by use of switching means 7.

At least a part of the function means 6 provide a locking signal Blk for the respective tuner 3 which is active for the function means 6. The locking signal is also fed to the channel selection means 4, so that in case of a channel change by typing in a new channel number into the key pad 5 or by use of any other keys for channel selection, e.g. channel up/down keys, the channel selection means 4 checks whether the actual tuner 3 is locked or not, i. e. if the locking signal Blk is set to activate locking of the actual tuner. In the case that the current tuner 3 is locked, the channel selection means 4 selects another one of the tuners 3, which is unlocked.

Further, the channel selection means 4 receives a signal quality information SQ from the tuners 3 for the current channel Ch set on the respective tuner 3. When selecting an unlocked tuner 3 for a new channel, the channel selection means 4 further checks whether the selected tuner 3 provides a channel signal for the selected program channel Ch. In one preferred embodiment, the channel selection means 4 selects the tuner which receives the best signal for the selected program channel Ch.

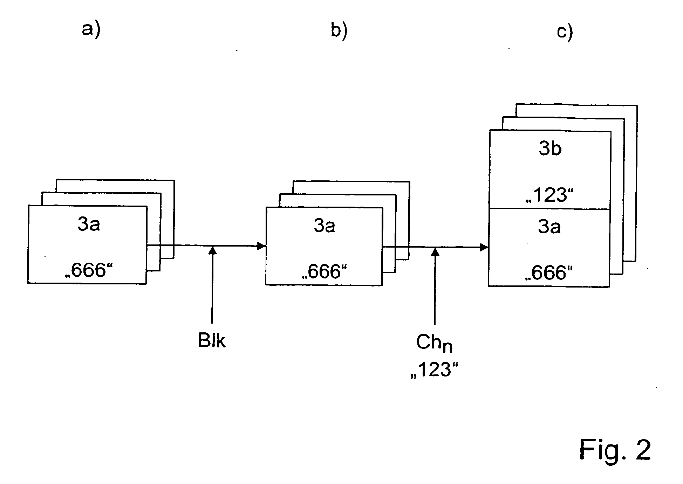

Figure 2 shows a flow diagram for the method for tuner selection by the channel selection means 4.

In a step a), the user is watching a program on tuner 3a. The program channel Ch is 666.

The active tuner 3a is locked with an event, which can be recording the watched program, downloading an electronic program guide, downloading software, parsing a signal information table or pausing a live video for time shifted replay and/or recording.

The active tuner 3a is then locked by means of a locking signal Blk in step b).

Then, the user changes the channel by entering a new channel number Chₙ, e. g. "123", into a key pad 5. The key pad 5 can be incorporated into a remote control. The user may also use other control for channel selection, e.g. keys for channel up/down switching, in order to change the program channel.

In a step c) the channel selection means 4 finds that the active tuner 3a is locked. Consequently, the channel selection means 4 searches for an unlocked tuner, which is e g. tuner 3b. Said tuner 3b is set to the selected channel Chₙ="123" and connected to the respective active function, e. g. the display, so that the user is now watching the selected program on tuner 3b. The locked tuner 3a is still set to the old program with program channel number "666" and is still connected to the event function which had caused the locking signal Blk for locking the tuner 3a.

Thus, the receiver 1 automatically changes the tuner 3 if the currently watched tuner 3a is locked. The user does not have to change the tuner 3 for channel change even if the currently watched tuner 3a is locked. The receiver 1 changes the tuner 3 on its own to a non locked tuner 3a.

## Claims

1. Receiver (1) comprising two or more tuner (3) for receiving selected program channels (Ch) in parallel and a channel selection means (4), said two or more tuners (3) having a locking signal (Blk) input for locking any change of the selected program channel, when the locking signal (Blk)I is set to activate locking,
**characterized in that**
the channel selection means (4) comprises an input for the locking signal (Blk) and **in that** the channel selection means (4) are provided for selecting one of the tuners (3), which is unlocked, based upon the locking signal (Blk), when a program channel (Ch) is selected by an user.

2. Receiver (1) according to claim 1, **characterized in that** the channel selection means (4) are provided for checking a signal quality information (SQ) of the tuners (3) indicating that a channel signal for a selected program channel (Ch) is received by a respective tuner (3) in the process of tuner selection in order to select an unlocked tuner (3) providing a channel signal for the selected program channel (Ch).

3. Receiver (1) according to claim 1 or 2, **characterized in that** the locking signal (Blk) is set by a record mode of a video recorder, a download of an electronic program guide (EPG), a download of receiver software, parsing of service information (SI) and/or pausing a live video for time shifted replay.

4. Receiver (1) according to one of the preceding claims **characterized in that** the receiver (1) is comprised in a video recorder or a television set.

## Patentansprüche

1. Empfänger (1) mit zwei oder mehr Tunern (3) zum parallelen Empfangen ausgewählter Programmkanäle (Ch) und einem Kanalauswahlmittel (4), wobei die zwei oder mehreren Tuner (3) einen Eingang für ein Sperrsignal (Blk) zum Sperren jeglicher Änderung des ausgewählten Programmkanals haben, wenn das Sperrsignal (Blk) zum Aktivieren des Sperrens eingestellt ist,
**dadurch gekennzeichnet, dass**
das Kanalauswahlmittel (4) einen Eingang für das Sperrsignal (Blk) hat und dass das Kanalauswahlmittel (4) zur Auswahl eines der Tuner (3), der basierend auf dem Sperrsignal (Blk) ungesperrt ist, wenn ein Programmkanal (Ch) durch einen Nutzer ausgewählt wird, eingerichtet ist.

2. Empfänger (1) nach Anspruch 1, **dadurch gekennzeichnet, dass** das Kanalauswahlmittel (4) zum Überprüfen einer Signalqualitätsinformation (SQ) der Tuner (3), die anzeigt, dass ein Kanalsignal für einen selektierten Programmkanal (Ch) durch einen jeweiligen Tuner (3) im Prozess der Tunerauswahl empfangen wird, eingerichtet ist, um einen ungesperrten Tuner (3), der ein Kanalsignal für den ausgewählten Programmkanal (Ch) bereitstellt, zu selektieren.

3. Empfänger (1) nach Anspruch 1 oder 2, **dadurch gekennzeichnet, dass** das Sperrsignal (Blk) durch einen Aufnahmemodus eines Videorekorders, durch ein Herunterladen eines elektronischen Programmführers (EPG), durch ein Herunterladen von Empfängersoftware, durch Analyse von Serviceinformation (S1) und/oder durch Pausieren eines Live-Videos für zeitversetzte Wiedergabe eingestellt wird.

4. Empfänger (1) nach einem der vorhergehenden Ansprüche, **dadurch gekennzeichnet, dass** der Empfänger (1) in einem Videorekorder oder einem Fernseher enthalten ist.

## Revendications

1. Récepteur (1) comprenant deux syntoniseurs (3) ou plus pour recevoir des canaux (Ch) de programme sélectionnés en parallèle et un moyen (4) de sélection de canaux, lesdits deux syntoniseurs (3) ou plus ayant une entrée de signal de verrouillage (Blk) pour verrouiller tout changement du canal de programme sélectionné, lorsque le signal de verrouillage (Blk) est réglé pour activer le verrouillage,
**caractérisé en ce que**
le moyen (4) de sélection de canaux comprend une entrée pour le signal de verrouillage (Blk) et **en ce que** le moyen (4) de sélection de canaux est pourvu pour sélectionner l'un des syntoniseurs (3), qui est déverrouillé, sur la base du signal de verrouillage (Blk), lorsqu'un canal (Ch) de programme est sélectionné par un utilisateur.

2. Récepteur (1) selon la revendication 1, **caractérisé en ce que** le moyen (4) de sélection de canaux est pourvu pour vérifier des informations de qualité de signal (SQ) des syntoniseurs (3) indiquant qu'un signal de canal pour un canal (Ch) de programme sélectionné est reçu par un syntoniseur respectif (3) dans le processus de sélection de syntoniseur afin de sélectionner un syntoniseur déverrouillé (3) fournissant un signal de canal pour le canal (Ch) de programme sélectionné.

3. Récepteur (1) selon la revendication 1 ou 2, **caractérisé en ce que** le signal de verrouillage (Blk) est réglé par un mode d'enregistrement d'un enregistreur vidéo, d'un téléchargement d'un guide de programme électronique (EPG), d'un téléchargement d'un logiciel de récepteur, d'une analyse d'informations de service (SI) et/ou d'une pause d'une vidéo en direct pour une retransmission différée.

4. Récepteur (1) selon l'une quelconque des revendications précédentes **caractérisé en que** le récepteur (1) est inclus dans un enregistreur vidéo ou dans un poste de télévision.
